Europäisches Patentamt

European Patent Office

Office européen des brevets

(19)

(11) Publication number: **0 021 713**
**B1**

(12) **EUROPEAN PATENT SPECIFICATION**

(45) Date of publication of patent specification: **07.03.84**

(21) Application number: **80301952.0**

(22) Date of filing: **10.06.80**

(51) Int. Cl.³: **F 16 L 21/06, F 01 N 7/18, B 21 D 53/00**

(54) Clamp and method of making same.

(30) Priority: **11.06.79 US 47659**

(43) Date of publication of application:
**07.01.81 Bulletin 81/1**

(45) Publication of the grant of the patent:
**07.03.84 Bulletin 84/10**

(84) Designated Contracting States:
**AT BE CH DE FR GB IT LI LU NL SE**

(56) References cited:
**GB - A - 1 357 930**
**US - A - 2 077 454**
**US - A - 2 300 089**
**US - A - 3 209 426**

(73) Proprietor: **Offterdinger, Hermann F.**
**602 Galway Drive**
**Burlington Ontario L7L 2S8 (CA)**

(72) Inventor: **Offterdinger, Hermann F.**
**602 Galway Drive**
**Burlington Ontario L7L 2S8 (CA)**

(74) Representative: **Barlow, Roy James et al,**
**J. A. Kemp & CO. 14, South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Clamp and method of making same

The present invention is concerned with clamps of the type consisting of a U-shaped bolt and a cooperating so-called saddle employed, for example, to clamp together two telescoped tubular members.

The quantity of the said type of clamp now manufactured each year in North America alone is in the tens of millions, one of the principal applications being in the installation of automobile exhaust systems to clamp together two telescoped steel pipes of circular cross-section. This particular field is exceptionally cost competitive and, as long as the clamp will perform satisfactorily, differences in price of only a fraction of a U.S. cent can mean the gain or loss of a contract involving several million clamps. It is essential therefore that the clamps be made by automatic processes, usually involving heavy metal presses, and the savings which can be made in the processes are limited. A much more fruitful approach at this time is to attempt to reduce the amount of metal required for the production of an effective clamp.

A typical clamp of this type is shown in U.S. Patent No. 3,209,426 as comprising a U-shaped bolt the ends of which are received in recesses of a stamped metal saddle plate which has been formed with a trough-like cross-section in the bight between the bolt-receiving parts thereof. However, despite the rigidifying effect of the trough-like reinforced bight there is nevertheless the need for relatively thick metal plate to be used to form the stamped saddle member.

It is known, for example from U.S. Patents Nos. 2,300,089 and 2,077,454, to provide tubular members of a closed box structure in order to allow reduced material quantities to be employed. However, the seam of the box will tend to open up if the same structure is used in an application, such as the clamp of U.S. Patent 3,209,426, where the structure will be subjected to bending stresses during its life.

Accordingly, it is an object of the present invention to provide a clamp of the "bolt-and-saddle" type giving adequate integrity and structural strength with even less material than is required for a conventional stamped metal saddle such as that disclosed in U.S. Patent No. 3,209,426.

In accordance with one aspect of the present invention there is provided a clamp saddle member for a clamp of the type comprising: a clamp saddle member formed from a piece of sheet metal and cooperating with a clamp bolt member to encircle an object to be clamped, the clamp bolt member including means for tightening the clamp about the clamp-receiving member, wherein the clamp saddle member has a bight portion of arcuate shape so as to have a concave side for engagement with the object and an opposite convex side, and the saddle member has two integral spaced bolt-receiving portions at the respective ends of the arcuate bight portion which receive the bolt member and the tightening means for the application of clamping force to the clamp by the said tightening means, characterised in that the said arcuate saddle bight portion consists of a portion of the sheet metal piece that has been bent to closed tubular form with opposite edges thereof butting against one another at a longitudinal junction disposed in the radially inner wall of the saddle bight portion, with the junction contacting the object as the clamp is tightened about the object so that the pressure applied cannot force the edges apart to any significant extent.

Also in accordance with the invention there is provided a method of making a clamp saddle member of the above specified type from a piece of sheet metal, for cooperating with a clamp bolt member which in use encircles an object to be clamped, and includes means for tightening the clamp about the object, wherein the clamp saddle member has a bight portion of arcuate shape so as to have a concave side for engagement with the object to be clamped and an opposite convex side, and the clamp saddle member has two integral spaced bolt-receiving portions at the respective ends of the arcuate bight portion which receive the bolt member and the tightening means for the application of clamping force to the clamp by the said tightening means; such method being characterised by forming the said piece of sheet metal to a closed tubular form with two opposite edges thereof butting against one another at a longitudinal junction, forming the closed tubular form to have a central portion of arcuate shape with the said junction at the radially-inner concave side thereof, and forming the said integral bolt-receiving portions at the ends of the said central arcuate portion.

In order that the invention may more readily be understood, particularly preferred embodiments of clamps in accordance with the invention will now be described, by way of example, with reference to the accompanying diagrammatic drawings wherein:

Figure 1 is an exploded perspective view of a complete saddle clamp constituting a first embodiment of the invention;

Figures 2a to 2d are perspective views showing the progressive formation of the saddle clamp by a series of stamping operations;

Figures 3 and 4 are plane sections through the clamp on the lines 3—3 and 4—4, respectively, of Figure 1, and showing the clamp placed on two telescoped tubular members to clamp them together;

Figure 5 is a plan view, similar to Figure 2a, of a blank from which is to be formed a clamp saddle of a clamp constituting a second embodiment of the invention;

Figure 6 is a perspective view showing the blank of Figure 5 folded about a longitudinal axis to an intermediate tube shape; and

Figure 7 is an exploded view of the said second embodiment clamp.

Similar parts are given the same reference number in all the Figures of the drawing.

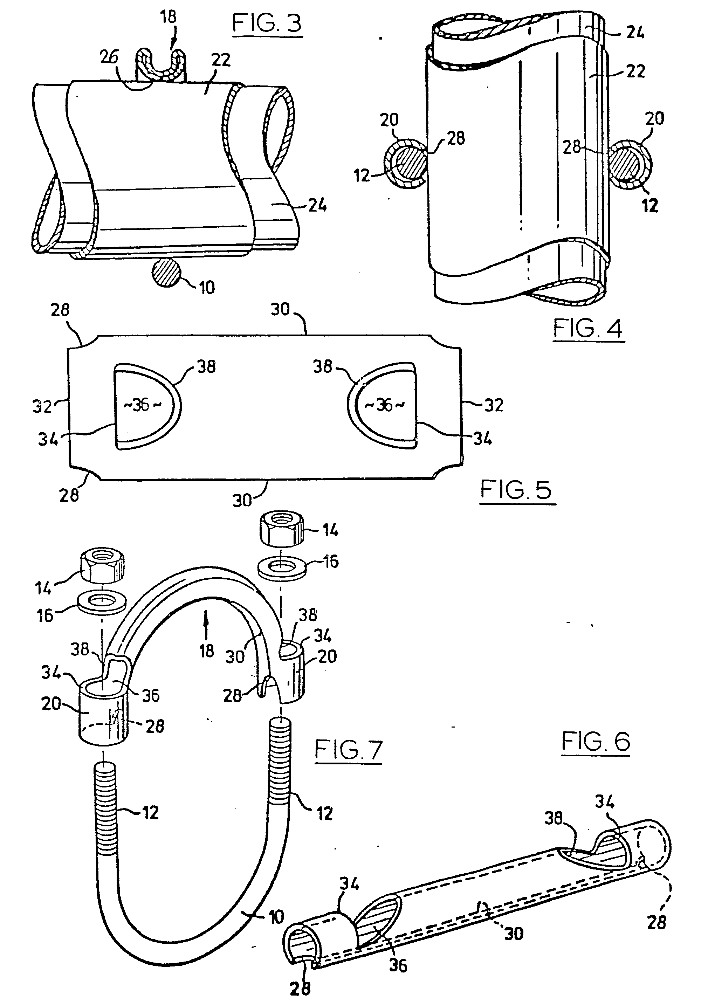

Each clamp consists of a U-bolt 10 having a semi-circular central bight portion and two parallel leg portions 12, one at each end of the bight portion, the leg portions being screw-threaded at their ends and receiving respective clamping nuts 14. Washers 16 may or may not be provided for cooperation with each nut, or the nuts may be of the kind provided with integral washer portions. The clamp also consists of a saddle 18 (Figure 3) of arcuate shape and terminating at its ends in two tubular portions 20 (Figure 4) through which the leg portions 12 extend for the clamp to surround and clamp onto an object or objects placed between them, such as the pair of telescoped tubes 22 and 24 shown in Figures 3 and 4. The concave face 26 of the saddle is also semi-circular and of extent such that it will cooperate with the semi-circular bolt bight to embrace completely the circumference of the outermost tube 22. The tubular portions 20 are cut away in a V- or U-shape at 28 (Figure 4) on the concave face 26 to expose as much as possible of the circumference of tube 22 to the U-bolt bight, and eliminate as much as possible any gap in the transition of clamping contact from bolt bight to the saddle bight.

The saddle preferably is formed by stamping a suitably-shaped blank from a metal sheet and is made with the central bight portion of the saddle between the tubular bolt leg receiving portions 20 of open channel cross-section with the channel opening at the convex face, the central portion merging smoothly into the tubular portions 20. In the two embodiments specifically illustrated herein the channel is of semi-circular transverse cross-section, as seen most clearly in Figure 3, but other cross-sections can also be used, such as open-sided rectangular or V- or U-shaped. This open-channel cross-section with the channel opening radially outwards permits high clamping pressures to be produce at the line of contact between the clamp and the object being clamped with the use of a minimum of metal for the saddle.

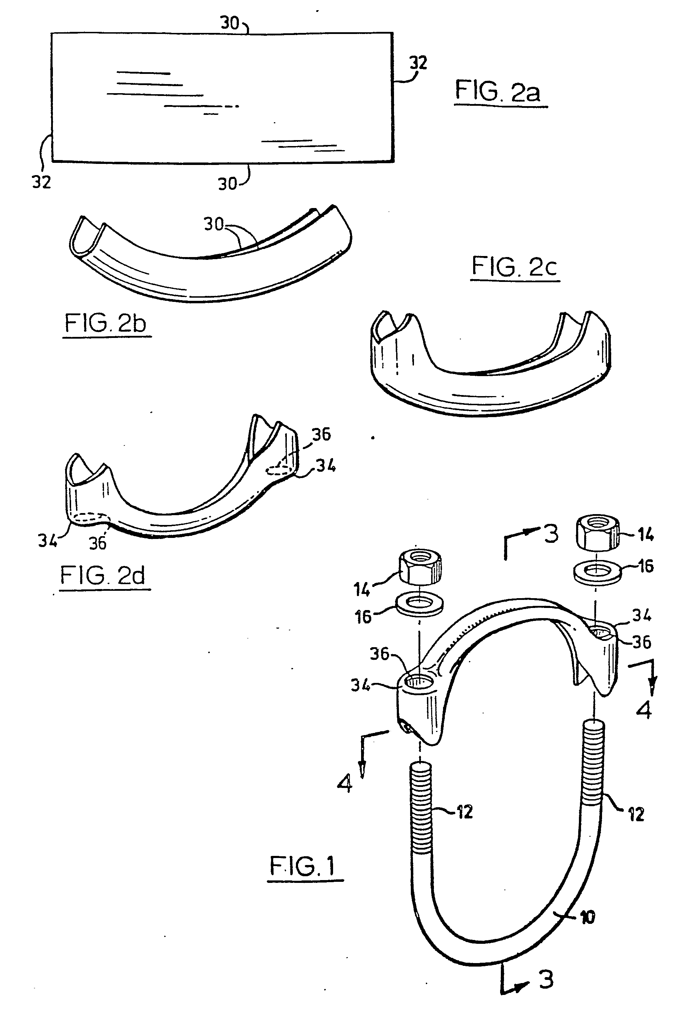

Referring now to Figures 2a to 2d, a preferred form of metal blank to produce the saddle of the first embodiment is shown in Figure 2a, and is of rectangular shape having a pair of opposed longer parallel edges 30 and a pair of opposed shorter edges 32. The blank is formed into the arcuate saddle of Figure 1 by a series of metal-working steps, for example on an indexing table with a corresponding plurality of dies, or using a single progressive die with the corresponding plurality of stations. In one step the blank is formed to the shape illustrated by Figure 2b, in which the two longer edges are folded toward each other until the blank assumes a U-shape transverse cross-section, while at the same time the blank is bent along its longer dimension to the arcuate form illustrated. In a second step which is not illustrated the end portions are shaped closer to that required to form the bolt-receiving tubular portions 20, this step causing the side walls between the tubular portions to bulge outwards. The piece is therefore immediately subjected to a further step to result in the shape of Figure 2c, in which those side walls are again parallel.

In the next step to produce the shape of Figure 2d the edges 30 are rolled inwards until they abut one another to form a hollow tube, and the portion of this tube between the two portions 28 is collapsed, so that the radially-outer part of the tube wall is in contact with the radially-inner part of the wall to form a double-walled saddle having the junction of the two edges 30 in the radially-inner portion, preferably centrally located therein. At the same time the end parts are provided with co-planar flat surfaces 34 for the tubular portions 20 that subsequently, after the punching of bolt-leg receiving holes 36 therein, provide the nut-bearing surfaces receiving washers 16 and nuts 14.

The cross-section of the central part of the saddle is best seen in Figure 3, while that of the tubular portions 20 is seen in Figure 4. It will be appreciated by those skilled in the art that a saddle of such construction has a high strength/weight ratio, the double-walled central portion giving extra rigidity where required while providing an elegant way of forming the tubular portions for the bolt legs 12. The location of the junction between the edges 30 is such that it is held closed by the adjacent part of the tube wall and the pressure applied as the clamp is clamped tightly cannot force the edges apart to any significant extent. In some particular applications it may be desirable to fasten the edges together, e.g. by welding or use of an adhesive, but for the most common application of such clamps, namely the clamping of automobile exhaust pipes, no such fastening is found to be necessary.

In a second embodiment illustrated by Figures 5 to 7 the metal blank is also of rectangular shape, but during its formation the corners are removed to provide the V- or U-shape cut-aways 28 upon rolling the blank about a longitudinal axis into the tubular form shown in Figure 6. The blank is provided with two U-shaped apertures 36 having their straight base edges 34 parallel and closely adjacent to the respective blank shorter sides 32, while the respective concave edges 38 extend toward each other. In the tubular form of Figure 6 these apertures form respective organpipe-like openings. The tube is then shaped to the arcuate final form of Figure 7, where the blank longer edges 30 will be butted against each other, assuming that they were not so butted when the tube was rolled. As the tube is shaped the portion of the hollow tube between the two apertures 36 is collapsed, as with the embodiment of Figures 1 to 4 to form a double-walled saddle having the junction of edges 30 in the radially-inner portion. The uncollapsed ends of the tube form the leg-receiving portions 20, while the aperture edges 34 form the bearing surfaces for the washers 16 and the clamping nuts 14.

It will be seen therefore that the present invention provides simple and effective clamps that can readily be formed by stamping and bending operations from thin sheet metal, without requiring deep drawing or acute bending, at least in the preferred embodiments illustrated. It is found for example that a prior art saddle clamp, as shown for example in my U.S. Patent No. 3,919,747, when intended for use to clamp on a tubular pipe of 5 cm diameter, requires the use of sheet steel of about 0.3 cm thickness, while a corresponding clamp of this invention employs metal of about 0.15 cm thickness. Moreover, the blank used for the production of the clamps of this invention in such a size is very much smaller and requires only about one third of the metal of my prior clamp. In addition, since the nut-receiving surfaces 34 are much closer to the diameter of the tubular members 22 and 24 the legs of the U-bolts can be shorter. The resultant saving in metal produces a very significant saving in overall cost of the resultant clamps.

## Claims

1. A clamp saddle member for a clamp of the type comprising: a clamp saddle member (18) formed from a piece of sheet metal and cooperating with a clamp bolt member (10) to encircle an object (22) to be clamped, the clamp bolt member including means (14, 16) for tightening the clamp about the object (22), wherein the clamp saddle member has a bight portion of arcuate shape so as to have a concave side (26) for engagement with the object (22) and an opposite convex side, and the saddle member has two integral spaced bolt-receiving portions (20) at the respective ends of the arcuate bight portion which receive the bolt member (10) and the tightening means (14, 16) for the application of clamping force to the clamp by the said tightening means, characterised in that the said arcuate saddle bight portion consists of a portion of the sheet metal piece that has been bent to closed tubular form with opposite edges (30) thereof butting against one another at a longitudinal junction disposed in the radially inner wall (26) of the saddle bight portion, with the junction contacting the object (22) as the clamp (10, 12, 14, 16, 18) is tightened about the object so that the pressure applied cannot force the edges (30) apart to any significant extent.

2. A clamp saddle member as claimed in claim 1, characterised in that the arcuate saddle bight portion has the radially outer wall portion thereof collapsed toward the radially inner wall portion (26), so that the bight is of open-sided channel transverse cross-section with the channel opening at the radially outer convex side.

3. A clamp saddle member as claimed in claim 1 or 2, characterised in that the said bight portion of the clamp saddle member (18) is semi-circular and is used in combination with a U-bolt (10) having a semi-circular bight portion, so that the clamp will embrace and contact the circumference of an object (22) of circular transverse cross-section placed between them.

4. A clamp saddle member as claimed in any one of claims 1 to 3, characterised in that the bight portion of the saddle is of semi-circular transverse cross-section.

5. A clamp saddle member as claimed in any one of claims 1 to 4, characterised in that the said tubular portions are cut away on the said concave side (26) to expose corresponding portions of the bolt member to the object (22) being clamped.

6. A clamp saddle member according to any one of claims 1 to 5, characterised in that the said bolt-receiving portions (20) each include a flat bolt-engaging face (34) defining an aperture (36) for closely embracing a respective end of the clamp bolt member (10).

7. A method of making a clamp saddle member according to claim 1 from a piece of sheet metal, for cooperating with a clamp bolt member (10) which in use encircles an object (22) to be clamped, and includes means (14, 16) for tightening the clamp about the object, wherein the clamp saddle member (18) has a bight portion of arcuate shape so as to have a concave side (26) for engagement with the object (22) to be clamped and an opposite convex side, and the clamp saddle member has two integral spaced bolt-receiving portions (20) at the respective ends of the arcuate bight portion which receive the bolt member (10) and the tightening means (14, 16) for the application of clamping force to the clamp by the said tightening means; such method being characterised by forming the said piece of sheet metal to a closed tubular form with two opposite edges (30) thereof butting against one another at a longitudinal junction, forming the closed tubular form to have a central portion of arcuate shape with the said junction at the radially-inner concave side (26) thereof, and forming the said integral bolt-receiving portions (20) at the ends of the said central arcuate portion.

8. A method as claimed in claim 7, further characterised by collapsing the radially-outer wall portion of the central arcuate saddle portion toward the radially-inner wall portion (26) so that the said central portion is a double-walled radially outwardly open channel.

9. A method as claimed in claim 7 or 8, characterised in that the clamp bolt member is a U-bolt (10) comprising a semi-circular bight portion and two leg portions, each of said leg portions being at a respective end of the bight portion and screw-threaded (at 12) for the reception of tightening means including respective clamping nuts (14), and in that the clamp saddle member (18) is formed to have a semi-circular bight portion.

10. A method as claimed in any one of claims 7 to 8, characterised in that the bight portion of the saddle is of semi-circular transverse cross-section.

11. A method as claimed in any one of claims 7 to 10, characterised by the step of forming the integral bolt-receiving portions (20) by stamping appropriate portions of the saddle member to define flat surfaces (34) defining holes dimensioned to receive respective ends of the clamp bolt member (10).

**Patentansprüche**

1. Klemmensattel für eine Klemme, die einen aus einem Blechstück geformten und mit einem Bolzenglied (10) der Klemme so zusammenwirkenden Klemmensattel (18) aufweist, daß sie einen festzuklemmenden Gegenstand (22) umgreift, bei der das Bolzenglied (10) Spannmittel (14, 16) zum Festspannen der Klemme um den Gegenstand (22) besitzt und der Klemmensattel eine bogenförmige Einbuchtung mit einer konkaven, an dem Gegenstand (22) zur Anlage kommenden Seite und einer gegenüberliegenden konvexen Seite aufweist und an den Enden der bogenförmigen Einbuchtung zwei einteilig angeformte voneinander beabstandete Bolzen-Aufnahmeabschnitte (20) hat, die das Bolzenglied (10) und die Spannmittel (14, 16) aufnehmen, um durch die Spannmittel eine Klemmkraft an der Klemme anzulegen, dadurch gekennzeichnet, daß die bogenförmige Einbuchtung des Klemmensattels aus einem Teil des Blechstückes besteht, der zu einer geschlossenen Rohrform gebogen ist, wobei gegenüberliegende Ränder (30) davon an einer längsverlaufenden Stoßfuge in der radial inneren Wandung (26) der Einbuchtung aneinander anliegen und beim Festspannen der Klemme (10, 12, 14, 16, 18) um den Gegenstand (22) die Stoßfuge den Gegenstand berührt, so daß der aufgebrachte Druck die Ränder (30) nicht in einem signifikanten Ausmaß auseinanderzwängenkann.

2. Klemmensattel nach Anspruch 1, dadurch gekennzeichnet, daß die radial äußere Wandung der bogenförmigen Einbuchtung des Klemmensattels in Richtung auf deren radial innere Wandung (26) derart eingefaltet ist, daß die Einbuchtung einen offenen rinnenförmigen Querschnitt besitzt, dessen Rinnenöffnung an der radial äußeren konvexen Seite liegt.

3. Klemmensattel nach Anspruch 1 oder 2, dadurch gekennzeichnet, daß die Einbuchtung des Klemmensattels (18) halbkreisförmig und in Verbindung mit einem U-förmigen Bolzen (10), der eine halbkreisförmige Einbuchtung besitzt, verwendbar ist, so daß die Klemme den Umfang eines dazwischen angeordneten Gegenstandes (22) von kreisförmigem Querschnitt umgreift und damit in Kontakt steht.

4. Klemmensattel nach einem der Ansprüche 1 bis 3, dadurch gekennzeichnet, daß der Einbuchtungsteil des Klemmensattels einen halbkreisförmigen Querschnitt hat.

5. Klemmensattel nach einem der Ansprüche 1 bis 4, dadurch gekennzeichnet, daß die rohrförmigen Bolzen-Aufnahmeabschnitte auf der konkaven Seite (26) ausgeschnitten sind, um entsprechende Abschnitte des Bolzengliedes gegenüber dem festzuklemmenden Gegenstand (22) freizulegen.

6. Klemmensattel nach einem der Ansprüche 1 bis 5, dadurch gekennzeichnet, daß die Bolzen-Aufnahmeabschnitte (20) jeweils eine ebene Bolzenabstützfläche (34) aufweisen, die eine das zugeordnete Ende des Bolzengliedes (10) eng umfassende Öffnung (36) begrenzt.

7. Verfahren zur Herstellung eines Klemmensattels nach Anspruch 1 aus einem Blechstück, der zum Zusammenwirken mit einem Bolzenglied (10) einer Klemme bestimmt ist, welches im Gebrauch einen festzuklemmenden Gegenstand (22) umfängt und Spannmittel (14, 16) zum Festspannen der Klemme um den Gegenstand aufweist, wobei der Klemmensattel (18) eine bogenförmige Einbuchtung mit einer mit dem festzuklemmenden Gegenstand (22) in Eingriff kommenden konkaven Seite und einer gegenüberliegenden konvexen Seite sowie zwei einteilig angeformte, voneinander beabstandete Bolzen-Aufnahmeabschnitte (20) an den Enden der bogenförmigen Einbuchtung besitzt, welche das Bolzenglied (10) und die Spannmittel (14, 16) aufnehmen, um durch die Spannmittel eine Klemmkraft an der Klemme anzulegen, gekennzeichnet durch Umformen des Blechstückes zu einer geschlossenen Rohrmform, wobei zwei gegenüberliegende Ränder (30) davon an einer längsverlaufenden Stoßfuge aneinander zur Anlage kommen, Umformen der geschlossenen Rohrform so, daß diese einen bogenförmigen Mittelabschnitt mit an der radial inneren konkaven Seite (26) davon liegender Stoßfuge erhält, und Ausbilden der einteilig angeformten Bolzen-Aufnahmeabschnitte (20) an den Enden des bogenförmigen Mittelabschnittes.

8. Verfahren nach Anspruch 7, gekennzeichnet, durch Einfalten des radial äußeren Wandteiles des bogenförmigen Mittelabschnittes des Klemmensattels in Richtung auf den radial inneren Wandteil (26) so, daß der Mittelabschnitt eine doppelwandige, radial nach außen offene Rinne bildet.

9. Verfahren nach Anspruch 7 oder 8, dadurch gekennzeichnet, daß das Bolzenglied der Klemme ein U-förmiger Bolzen (10) mit einer halbkreisförmigen Einbuchtung und zwei Schenkelabschnitten ist, von denen jeder an einem entsprechenden Ende der Einbuchtung ansetzt und (bei 12) ein Schraubgewinde zur Aufnahme von Spannmitteln einschließlich Klemmuttern (14) trägt, und daß der Klemmensattel (18) so umgeformt wird, daß er eine halbkreisförmige Einbuchtung erhält.

10. Verfahren nach einem der Ansprüche 7 und 8, dadurch gekennzeichnet, daß der Einbuchtungsteil des Klemmensattels einen halbkreisförmigen Querschnitt hat.

11. Verfahren nach einem der Ansprüche 7 bis 10, gekennzeichnet durch einen Verfahrensschritt, bei dem die Ausbildung der einteilig angeformten Bolzen-Aufnahmeabschnitte (20) durch Stanzpressen geeigneter Abschnitte des Klemmensattels so erfolgt, daß ebene Flächen (34), die zur Aufnahme der zugeordneten Enden des Bolzengliedes (10) bemessene Löcher umgrenzen, gebildet werden.

## Revendications

1. Organe formant étrier de collier de serrage pour un collier de serrage du type comprenant: un organe (18) formant étrier de collier de serrage formé d'une pièce en tôle métallique et coopérant avec un organe formant boulon de collier de serrage (10) pour entourer un objet (22) à serrer, l'organe formant boulon de collier de serrage comprenant un moyen (14, 16) pour serrer le collier de serrage autour de l'objet (22), l'organe formant étrier de collier de serrage ayant une partie en anse de forme arquée afin d'avoir un côté concave (26) pour engagement avec l'objet (22) et un côté convexe opposé, et l'organe formant étrier ayant deux parties intégrantes espacées (20) pour recevoir un boulon, aux extrémités respectives de la partie en anse arquée qui reçoivent l'organe formant boulon (10) et le moyen de serrage (14, 16) pour l'application d'une force de serrage au collier de serrage par ledit moyen de serrage, caractérisé en ce que ladite partie en anse arquée de l'étrier consiste en une partie de la pièce en tôle métallique qui a été courbée à une forme tubulaire fermée avec ses bords opposés (30) en aboutement l'un contre l'autre à une jonction longitudinale disposée dans la paroi radialement interne (26) de la partie en anse de l'étrier, la jonction venant en contact avec l'objet (22) lorsque le collier de serrage (10, 12, 14, 16, 18) est serré autour de l'objet de façon que la pression appliquée ne puisse forcer les bords (30) à se séparer de façon importante.

2. Organe formant étrier de collier de serrage selon la revendication 1, caractérisé en ce que la partie de boucle arquée de l'étrier a sa partie de paroi radialement externe affaissée vers la partie de paroi radialement interne (26), de façon que la boucle ait une section transversale en forme de gorge à côté ouvert, la gorge s'ouvrant du côté convexe radialement externe.

3. Organe formant étrier de collier de serrage selon la revendication 1 ou 2, caractérisé en ce que ladite partie de boucle de l'organe formant étrier de collier de serrage (18) est semicirculaire et est utilisée en combinaison avec un boulon en U (10) ayant une partie en boucle semicirculaire, de façon que le collier de serrage entoure, et vienne au contact de la circonférence d'un objet (22) de section transversale circulaire placé entre eux.

4. Organe formant étrier de collier de serrage selon l'une quelconque des revendications 1 à 3 caractérisé en ce que la partie de boucle de l'étrier a une section transversale en demicercle.

5. Organe formant étrier de collier de serrage selon l'une quelconque des revendications 1 à 4, caractérisé en ce que lesdites parties tubulaires sont découpées sur ledit côté concave (26) pour exposer des parties correspondantes de l'organe formant boulon à l'objet (22) qui est serré.

6. Organe formant étrier de collier de serrage selon l'une quelconque des revendications 1 à 5, caractérisé en ce que lesdites parties (20) pour recevoir un boulon comprennent chacune une face plate (34) d'engagement du boulon définissant une ouverture (36) pour entourer très précisément une extrémité respective de l'organe formant boulon de serrage (10).

7. Procédé de fabrication d'un organe formant étrier de collier de serrage selon la revendication 1 à partir d'un morceau de tôle métallique, pour coopérer avec un organe formant boulon de collier de serrage (10) qui, en utilisation, entoure un objet (22) à serrer, et comprend un moyen (14, 16) pour serrer le collier autour de l'objet, l'organe formant étrier de collier de serrage (18) ayant une partie en anse de forme arquée afin d'avoir un côté concave (26) pour engagement avec l'objet (22) à serrer et un côté convexe opposé, et l'organe formant étrier de collier de serrage ayant deux parties intégrantes espacées (20) pour recevoir un boulon aux extrémités respectives de la partie en anse arquée qui reçoivent l'organe formant boulon (10) et le moyen de serrage (14, 16) pour l'application d'une force de serrage au collier de serrage par ledit moyen de serrage; ce procédé, étant caractérisé par le formage dudit morceau de tôle en métal suivant une forme tubulaire fermée avec deux bords opposés (30) en aboutement l'une contre l'autre à une jonction longitudinale, le formage de la forme tubulaire fermée pour qu'elle ait une partie centrale de forme arquée avec ladite jonction sur son côté (26) concave radialement vers l'intérieur et le formage desdites parties intégrantes (20) pour recevoir un boulon aux extrémités de ladite partie centrale arquée.

8. Procédé selon la revendication 7, caractérisé en outre par l'affaissement de la partie de paroi radialement externe de la partie centrale arquée d'étrier vers la partie (26) radialement interne de paroi de façon que ladite partie centrale soit une gorge à double paroi ouverte radialement vers l'extérieur.

9. Procédé selon la revendication 7 ou 8, caractérisé en ce que l'organe formant boulon de serrage est un boulon en U (10) comprenant une partie en boucle semi-circulaire et des parties de branche, chacune desdites parties de branche se trouvant à une extrémité respective de la partie de boucle et étant filetée (en 12) pour la réception de moyens de serrage comprenant des écrous respectifs de serrage (14), et en ce que l'organe (18) formant étrier de collier de serrage est formé pour avoir une partie en boucle semi-circulaire.

10. Procédé selon l'une quelconque des revendications 7 à 8, caractérisé en ce que la partie de boucle de l'étrier a une section transversale en demi-cercle.

11. Procédé selon l'une quelconque des revendications 7 à 10, caractérisé par l'étape du formage des parties intégrantes (20) pour recevoir un boulon, par emboutissage de parties appropriées de l'organe formant étrier pour définir des surfaces plates (34) définissant des trous dimensionnés pour recevoir les extrémités respectives de l'organe formant boulon du collier de serrage (10).

FIG. 2a

FIG. 2b

FIG. 2c

FIG. 2d

FIG. 1

FIG. 3

FIG. 4

FIG. 5

FIG. 7

FIG. 6